(19) Europäisches Patentamt
European Patent Office
Office européen des brevets

(11) Publication number: 0 136 790
B1

# (12) EUROPEAN PATENT SPECIFICATION

(45) Date of publication of patent specification: 19.10.88

(51) Int. Cl.$^4$: C 04 B 24/12 // C07F9/65

(21) Application number: 84305409.9

(22) Date of filing: 08.08.84

## (54) New additives for retarding setting of cement from methylenephosphonated aminohydrocarbylpiperazine-urea adducts.

(30) Priority: 02.09.83 US 528831

(43) Date of publication of application:
10.04.85 Bulletin 85/15

(45) Publication of the grant of the patent:
19.10.88 Bulletin 88/42

(84) Designated Contracting States:
DE FR GB IT NL

(56) References cited:
EP-A-0 136 015
CH-A- 414 645
US-A-4 225 595

SOVIET INVENTIONS ILLUSTRATED, Derwent Public. Ltd., Section Chemical, Week Y11, abstract no. 19645, C01, 26th April 1977

CHEMICAL ABSTRACTS, vol. 98, no. 20, 16th May 1983, page 323, no. 166038s, Columbus, Ohio, US

(73) Proprietor: THE DOW CHEMICAL COMPANY
2030 Dow Center Abbott Road P.O. Box 1967
Midland, MI 48640 (US)

(72) Inventor: Crump, Druce K.
142 Oyster Creek Drive No. 48
Lake Jackson Texas 77566 (US)
Inventor: Wilson, David A.
229 San Saba
Richwood Texas 77531 (US)

(74) Representative: Burford, Anthony Frederick et al
W.H. Beck, Greener & Co. 7 Stone Buildings
Lincoln's Inn
London WC2A 3SZ (GB)

EP 0 136 790 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The use of methylenephosphonic acid substituted alkylene polyamines for metal ion control at less than stoichiometric amounts was suggested in a patent to Bersworth (U.S. 2,609,390) in 1952. Later a water dispersible polymeric amine chelating agent which included alkylene phosphonate derivatives was indicated as having "threshold" effects in scale inhibition applications (U.S. 3,331,773), this term being used to describe the use of the agent in less than stoichiometric amounts. The diamine and polyamine methylenephosphonate derivatives are taught and claimed in U.S. Patents 3,336,221 and 3,434,969, respectively. Some of the products disclosed in these two patents are available commercially and are recommended as scale inhibitors when applied in threshold amounts.

Some other patents which disclose heterocyclic nitrogen containing compounds which are useful as chelating agents and may be employed in threshold amounts are U.S. 3,674,804; 3,720,498; 3,743,603; 3,859,211; and 3,954,761. Some of the compounds included therein are heterocyclic compounds having the formulas:

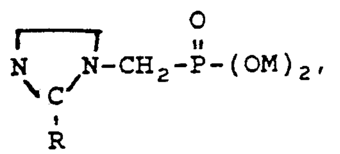

wherein R is hydrogen or alkyl and M is hydrogen, alkali metal, ammonium or a di- or triethanolamine radical;

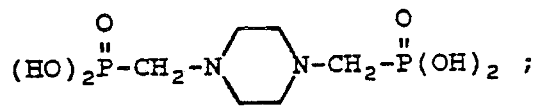

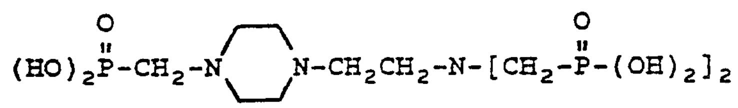

and

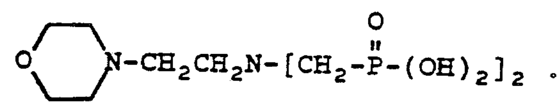

Methylenephosphonates of polyalkylene polyamines, disclosed in U.S. patent 4,051,110, are made by reacting di- or polyamines with a chain extending agent such as a dihalide or an epoxyhalide, e.g. ethylene dichloride or epichlorohydrin and thereafter, with phosphorous acid and formaldehyde. Thus, for example, triethylenetetramine is reacted with epichlorohydrin in an approximately one to one mole ratio; thereafter the product is reacted with phosphorous acid, and formaldehyde in the presence of hydrochloric acid. The resulting methylenephosphonated polyamine is useful in small amounts as a scale inhibitor, being employed at concentrations of 20—50 ppm.

Certain phosphonic acid derivatives of the aliphatic acids can be prepared by reacting phosphorous acid with acid anhydrides or acid chlorides, e.g. the anhydrides or chlorides of acetic, propionic and valeric acids. The compounds prepared have the formula

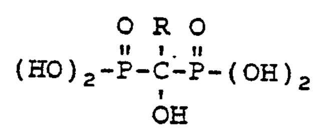

wherein R is a lower alkyl radical having 1 to 5 carbon atoms. The method of making and use of these products is described in U.S. patent 3,214,454. It discloses and claims the use of threshold amounts to prevent calcium precipitation in aqueous solutions.

Hydrophobic-substituted phosphonic or phosphinic acids and their alkali metal salts have been used in cements, primarily soil/cement mixtures, to improve the freeze-thaw properties and salt-resistance. Six- to eighteen-carbon alkyl phosphonic acids or their alkali metal salts are so described in U.S. Patent 3,794,506. A plugging mixture for high temperature oil and gas wells comprising Portland cement and 1-hydroxy ethylidene-phosphonic acid trisodium or tripotassium salts as set time extenders is described in Derwent abstract 71376B/39 (1979) of USSR Patent 640,019. The use of these phosphonate salts at temperatures of 75° to 150°C in amounts of 0.1—0.3 percent by weight is described in the abstract.

Other organic phosphorous acid derivatives are taught to be useful additives in cement compositions as turbulence-inducing and flow-property improver additives (U.S. 3,964,921 and 4,040,854, respectively).

Another turbulence-inducer is a pyrolysis product of urea and a bis(alkylenepyrophosphate) (U.S. 3,409,080).

Alkylene diphosphonic acids and their water soluble salts are described as set time extenders and water reducing agents for gypsum plasters (U.S. 4,225,361). Lignins which have been phosphonoalkylated through an ether linkage or corresponding sulfonates, sulfides, hydroxyl or amine derivatives are taught to be useful primarily as dispersants or surfactants (U.S. 3,865,803) and are also said to be useful as "cement additives" without indicating specific uses.

Ultra-rapid hardening Portland cement compositions are described which contain various acid salt additives (U.S. 4,066,469). It states that use of acid phosphates as the acid salt additives is excluded since the phosphates have a characteristically powerful retarding property peculiar to them.

Most of the cement used in oil wells is called portland cement. Portland cement is manufactured by calcining raw materials consisting of limestone, clay, shale, and slag together at 2,600 to 2,800°F (1400 to 1550°C) in a rotary kiln.

The resulting material, is cooled and interground with small percentages of gypsum to form portland cement. In addition to the above raw materials, other components such as sand, bauxite, iron oxide, etc., may be added to adjust the chemical composition depending upon the type of portland cement desired.

The principal components of the finished portland cement are lime, silica, alumina, and iron. These components form the following complex compounds: Tricalcium aluminate, ($3CaO \cdot Al_2O_3$), tetracalcium aluminoferrite, ($4CaO \cdot Al_2O_3 \cdot Fe_2O_3$), tricalcium silicate, ($3CaO \cdot SiO_2$), and dicalcium silicate, ($2CaO \cdot SiO_2$).

When water is added to cement, setting and hardening reactions begin immediately. The chemical compounds in the cement undergo the processes of hydration and recrystallization which results in a set product. The maximum amount of water that can be used with an oil-well cement is the amount which can be added before solids separation occurs. The minimum amount of water is the amount required to make the slurry pumpable. Therefore, the normal water ratio is governed by the maximum and minimum limits for a particular class of cement.

Thickening time is the time that the cement remains pumpable in the well. This is the most critical property of an oil-well cement. The thickening time has to be long enough to be pumped into place and short enough to permit operations to resume quickly. Generally, 3 hours provides the necessary placement time plus a safety factor.

Other factors, such as fluid loss, viscosity and density must be taken into consideration and additives are known to the art-skilled which affect each of these factors as well as that of set, or thickening, time as mentioned above. Another parameter which has an effect on set time is temperature. Cement sets more rapidly as the temperature increases. This must be taken into consideration particularly when pumping cement into deeper wells since temperature increases as the depth of the well becomes greater. Temperature also affects the strength of the cement, the strength becoming less as the temperature increases.

Because of this temperature effect, it is important to retard the setting of the cement employed in the deeper wells.

It has now been found that certain methylene phosphonic acid derivatives of aminohydrocarbyl piperazine-urea adducts are good cement retarders.

While the methylene phosphonate of aminoethylpiperazine itself has been shown not to have very good cement retarder activity, the analogous derivatives of the adducts of aminoethylpiperazine and urea have now been found to be quite effective.

According to the present invention, there is provided a process for retarding the setting of an aqueous cement slurry which comprises adding to said slurry an organic phosphonate retarder, characterized in that the organic phosphonate is a compound having the formula

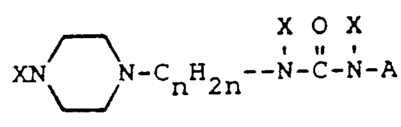

wherein A is

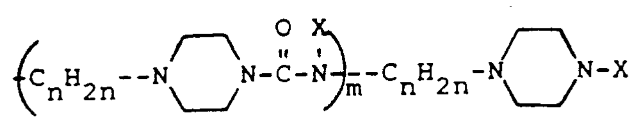 or X;

X is $-CH_2-\overset{O}{\overset{\|}{P}}(OR)_2$ or H;

R is H, ammonium, an alkali or alkaline earth metal; m is 0—2; n is 2 or 3, preferably 2; and wherein at least one X is:—

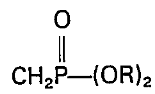

Preferably, A is

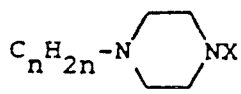 or X

When R is an alkaline earth metal, it preferably is magnesium or calcium.

The compounds from which the methylenephosphonates are derived ("starting materials") have the formula

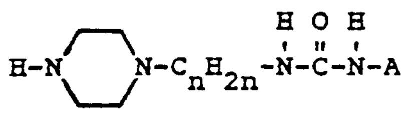 (I)

wherein A is

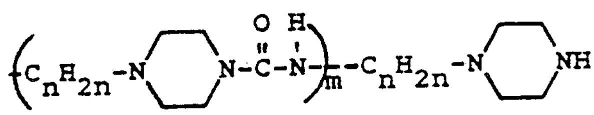 (II)

or hydrogen; and where m is 0—2 and n is 2 or 3. These compounds are made by reacting urea with an aminohydrocarbylpiperazine.

Starting materials in which A is according to formula (II) are easily prepared as follows:

Suitable aminoalkyl piperazines which can be employed include those represented by the general formula

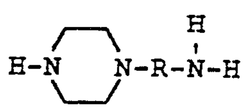

wherein R is a divalent hydrocarbyl group having from about 2 to about 10, preferably from about 2 to about 4, and most preferably from about 2 to about 3 carbon atoms. The hydrocarbon group can be cyclic, acyclic, aromatic or non-aromatic. Particularly suitable aminohydrocarbyl piperazines include, for example, aminoethyl piperazine, aminopropyl piperazine, aminobutyl piperazine, aminopentyl· piperazine, aminohexyl piperazine, aminoheptyl piperazine, aminooctyl piperazine, aminononyl piperazine, aminodecyl piperazine, mixtures thereof and the like.

Suitable catalysts which can be employed include such basic catalysts as, for example, basic ion exchange resins, quaternary ammonium compounds, phosphonium compounds, imidazoles, mixtures thereof and the like.

Suitable basic ion exchange resins include, for example, DOWEX MSA—1 (chloride or hydroxide form), DOWEX 1, DOWEX 2, DOWEX 11, DOWEX 21K, mixtures thereof and the like. The ion exchange resin can be employed either in the wet or dry form.

Suitable quaternary ammonium catalyst include, for example, benzyltrimethylammonium chloride, benzyltrimethylammonium bromide, benzyltrimethylammonium hydroxide, tetramethylammonium chloride, tetramethylammonium bromide, tetramethylammonium hydroxide, tetrabutylammonium chloride, tetrabutylammonium bromide, tetrabutylammonium hydroxide, mixtures thereof and the like.

Suitable phosphonium catalysts include, for example, tetra(hydroxymethyl)phosphonium chloride, tetrahydroxymethylphosphonium bromide, ethyltriphenylphosphonium iodide, butyltriphenylphosphonium halides, methyltriphenylphosphonium halides, tetrabutylphosphonium halides, methyltributylphosphonium halides, ethyltriphenylphosphonium acetate·acetic acid complex, tetrabutylphosphonium acetate·acetic acid complex, mixtures thereof and the like.

Suitable imidazole catalysts which can be employed herein include, for example, 2-methyl imidazole, mixtures thereof and the like.

Suitable mole ratios of aminohydrocarbyl piperazine to urea are from about 1.8:1 to about 6:1, preferably from about 1.8:1 to about 4:1, most preferably from about 1.8:1 to about 2.2:1.

The reaction can be carried out at any suitable temperature which can vary depending upon the specific reactants and catalyst employed. However, generally, temperatures of from about 60°C to about 185°C, preferably from about 80°C to about 160°C and most preferably from about 90°C to about 135°C can be employed.

The particular reaction time depends upon the particular reactants, catalyst, reaction temperature and pressure and when significantly short can result in low conversion. Longer reaction times tend to produce products having higher amine hydrogen equivalent weights as determined by titration with HCl using bromthymol blue as the indicator. Usually the time is from about 16 to about 200 hours (57,600—720,000 s), preferably from about 18 to about 67 hours (64,800—241,200 s), and most preferably from about 18 to about 24 hours (64,800—86,400 s).

Although it is not necessary and would result in an additional removal or separation step, the process of preparing the starting materials can be conducted in the presence of an inert organic reaction medium such as, for example, water, methanol, ethanol, propanol, butanol, mixtures thereof and the like.

The following are examples of the preparation of starting materials in which A is according to formula (II).

Example S—1

Aminoethylpiperazine (516.84 g, 4 moles) was added to a 1-liter reaction vessel equipped with a stirrer, reflux condenser, temperature control and indicating means. After raising the temperature to about 120°C, 0.32 g (0.0039 mole) of 2-methylimidazole catalyst was added, immediately followed by the addition of 20 g (0.3 mole) of urea. After reacting for 2 hours at 120°C while stirring, another 0.32 g (0.0039 mole) of 2-methylimidazole catalyst was added, followed by the addition of 40 g (0.7 moles) of urea. The progress of the reaction was monitored periodically by titration with 1N HCl employing bromthymol blue as an indicator. The titration results after 54.3 hours was the same as that after 17.4 hours at 120°C. The excess aminoethyl piperazine was removed by means of a rotoevaporator at a temperature of 120°C and a pressure of 0.120 mm HgA (16.0 Pa, absolute). The product yield was >99% based on urea conversion and 93.3 percent based on net product weight. The amino hydrogen equivalent weight was determined to be 195.3. The product was a highly viscous straw colored mass.

Examples S—2 to S—20

All the examples in Table I employed either 500 ml, 1 liter or 5 liter 3-necked flask or 4 liter resin kettles. These reaction vessels were stirred at 250 to 500 rpm's using a lab stirring motor with an attached stirring rod and paddles. To each reaction vessels was attached a water cooled condenser, thermometer, temperature controller made by $I^2R$ Thermowatch Instruments, Cheltenham, Pa. and one heat lamp, except for 4 liter sized runs where two heat lamps were used. The heat lamps were controlled using $I^2R$ thermowatch and the lamps were positioned in such a manner as to prevent localized heating on the sides of the vessel.

The liquid aminoethyl piperazine (AEP) was added to the vessel at ambient temperature. The stirrer and $I^2R$ thermowatch were turned on and the AEP was heated to the reaction temperature as given in Table I. Then the solid urea pellets were added in increments of from 3 to 7 additions at approximately equal intervals of time between each addition. For most of the runs given in Table I these increments were of approximately equal amounts.

The reaction conditions for each example are given in Table I. The molar ratio of AEP to urea varied from 1.9/1 to 6.0/1. The reaction temperature varied from 118°C to 150°C while the total time required to add the urea incrementally to the AEP varied from 1 to 3.1 hours.

In each example the urea was added manually to the stirred AEP at or near the reaction temperature. Each addition took less than 1 minute (60 s) and the reaction vessel was quickly stoppered after the addition which prevented ammonia from escaping by any route other than through the water cooled condenser. The condenser prevented large quantities of AEP from being lost by entrainment as the ammonia came out. The liberated ammonia was easily detected by holding a stopper wetted with HCl above the condenser which caused white fumes above the condenser. Usually it took from 2 to 5 minutes (120 to 300 s) after the first urea addition before any liberation of ammonia was detectable. Thereafter, the ammonia was continually given off throughout the remaining incremental additions and until the reaction was terminated by turning off the heat source and allowing the product to cool off.

An endotherm usually about 2°C to 3°C was always detected with each addition. Each urea addition was accompanied by a considerable frothing of the stirred reactants, due to escaping ammonia.

By adding the urea incrementally, "frothing over" of liquid product was prevented and the intervals of time between additions was adjusted to allow the temperature to return to the desired setting.

Samples were taken periodically and titrated with 1N HCl to a green end point using bromthymol blue indicator. Then the amine equivalent weight was determined by using the formula

$$\text{Amine Equivalent Weight} = \frac{\text{Sample Weight (grams)}}{\text{Titrant (ml)} \times 10^{-3}\ \text{(equivalents/ml)}}$$

With this method no distinction was made between a primary and a secondary amine. For example, 2 moles of HCl were required to titrate 1 mole of aminoethyl piperazine.

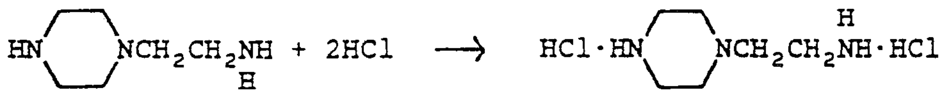

Hence, initially the aminoethyl piperazine before reacting with urea had an amine equivalent weight very close to its molecular weight divided by 2 or 129.21 divided by 2 = 64.61. For all of these examples, the reaction temperature was maintained and the stirring was continued until the amine equivalent weights as reported in Table II were attained. The amine equivalent weights for these examples ranged from 123 to 207.

Generally for AEP/urea adducts made from AEP/urea molar ratios of 1.9/1 to 2.1/1, the residual AEP was from about 3% to 10%. Residual AEP reduced the viscosity of the hardener and made it easier to mix for curing epoxy resins.

For runs where a considerably higher AEP/urea molar ratio was used the unreacted aminoethyl piperazine was stripped by placing the product solution in a rotaflask. Then the flask was attached to a rotaevaporator using a heat lamp and variac to control the stripping temperature and a vacuum pump was used to reduce the pressure. The stripping temperature, stripping time and pressure used are given in Table I.

TABLE I

LAB BATCH REACTIONS

General Procedure: Incremental Addition of Urea to Aminoethyl piperazine

| REACTION CONDITIONS | EXAMPLE 2 | EXAMPLE 3 | EXAMPLE 4 | EXAMPLE 5 | EXAMPLE 6 | EXAMPLE 7 | EXAMPLE 8 |
|---|---|---|---|---|---|---|---|
| AEP, g (mole) | 2816.78 (21.8) | 2816.78 (21.8) | 2816.78 (21.8) | 2584.2 (20.0) | 2584.2 (20.0) | 646.05 (5.0) | 2816.78 (21.8) |
| UREA, g (mole) | 688.89 (11.47) | 688.89 (11.47) | 688.89 (11.47) | 632.19 (10.526) | 632.19 (10.526) | 150.15 (2.5) | 654.65 (10.9) |
| AEP/UREA (mole ratio) | 1.9/1 | 1.9/1 | 1.9/1 | 1.9/1 | 1.9/1 | 2.0/1 | 2.0/1 |
| CATALYST | None | None | None | 2-methyl imidazole | 2-methyl imidazole | 2-methyl imidazole | None |
| CATALYST AMOUNT (g per mole UREA) | --- | --- | --- | .37 | .37 | .89 | --- |
| REACTION TEMP. (°C) | 135 | 135 | 135 | 120 | 120 | 150 | 135 |
| UREA Add. Time Hours/ (Seconds) | 2.4 (8640) | 2.4 (8640) | 2.4 (8640) | 2.6 (9360) | 2.6 (9360) | 1.6 (5760) | 1.4 (5040) |
| REACTION TIME Hours/ (Seconds) | 22 (79,200) | 45.7 (164,520) | 141.4 (509,040) | 22 (79,200) | 77 (277,200) | 23 (82,800) | 22.4 (80,640) |

TABLE I (continued)

LAB BATCH REACTIONS
General Procedure: Incremental Addition of Urea to Aminoethyl piperazine

| REACTION CONDITIONS | EXAMPLE 2 | EXAMPLE 3 | EXAMPLE 4 | EXAMPLE 5 | EXAMPLE 6 | EXAMPLE 7 | EXAMPLE 8 |
|---|---|---|---|---|---|---|---|
| EXCESS AEP STRIPPING CONDITIONS: | | | | | | | |
| Strip temp.(°C) | N.S.*** | N.S. | N.S. | N.S. | N.S. | N.S. | N.S. |
| Pressure (mmHg) | N.S. | N.S. | N.S. | N.S. | N.S. | N.S. | N.S. |
| Strip time (hrs) | N.S. | N.S. | N.S. | N.S. | N.S. | N.S. | N.S. |
| ANALYSIS: | | | | | | | |
| Amine Equivalent weight | 143.67 | 145.53 | 155.00 | 130.70 | 159.54 | 133.96 | 129.5 |
| Scale of Reactions (g of Reactants) | 3505.67 | | | | | 798.43 | 3471.43 |
| Yield (g Product) | | | | | | 708.20 | |

TABLE I (continued)

LAB BATCH REACTIONS

General Procedure: Incremental Addition of Urea to Aminoethyl piperazine

| REACTION CONDITIONS | EXAMPLE 9 | EXAMPLE 10 | EXAMPLE 11 | EXAMPLE 12 | EXAMPLE 13 | EXAMPLE 14 | EXAMPLE 15 |
|---|---|---|---|---|---|---|---|
| AEP, g (mole) | 2816.78 (21.8) | 2816.78 (21.8) | 2816.78 (21.8) | 2816.78 (21.8) | 2816.78 (21.8) | 2957.62 (22.89) | 2957.62 (22.89) |
| UREA, g (mole) | 654.65 (10.9) | 654.65 (10.9) | 654.65 (10.9) | 654.65 (10.9) | 654.65 (10.9) | 654.65 (10.9) | 654.65 (10.9) |
| AEP/UREA (mole ratio) | 2.0/1 | 2.0/1 | 2.0/1 | 2.0/1 | 2.0/1 | 2.1/1 | 2.1/1 |
| CATALYST | None | None | None | None | None | None | None |
| CATALYST AMOUNT (g per mole UREA) | --- | --- | --- | --- | --- | --- | --- |
| REACTION TEMP. (°C) | 135 | 135 | 135 | 120 | 130 | 135 | 135 |
| UREA Add. Time Hours/ (Seconds) | 1.4 (5040) | 1.3 (6080) | 1.4 (5040) | 1.3 (6080) | 1.2 (4320) | 1.4 (5040) | 1.4 (5040) |
| REACTION TIME Hours/ (Seconds) | 47.25 (170,100) | 66.5 (239,400) | 141.5 (509,400) | 90.47 (325,692) | 95 (342,000) | 48.4 (174,240) | 113.4 (408,240) |

TABLE I (continued)

LAB BATCH REACTIONS

General Procedure: Incremental Addition of Urea to Aminoethyl piperazine

| REACTION CONDITIONS | EXAMPLE 9 | EXAMPLE 10 | EXAMPLE 11 | EXAMPLE 12 | EXAMPLE 13 | EXAMPLE 14 | EXAMPLE 15 |
|---|---|---|---|---|---|---|---|
| EXCESS AEP STRIPPING CONDITIONS: | | | | | | | |
| Strip temp.(°C) | N.S. | N.S. | N.S. | N.S. | N.S. | N.S. | N.S. |
| Pressure (mmHg) | N.S. | N.S. | N.S. | N.S. | N.S. | N.S. | N.S. |
| Strip time (hrs) | N.S. | N.S. | N.S. | N.S. | N.S. | N.S. | N.S. |
| ANALYSIS: | | | | | | | |
| Amine Equivalent weight | 135.83 | 132.45 | 137.79 | 130.60 | 132.87 | 128.28 | 130.21 |
| Scale of Reactions (g of Reactants) | 3471.43 | 3471.43 | 3471.43 | 3471.43 | 3471.43 | --- | 3612.27 |
| Yield (g Product) | | 3097.0 | 2982.6 | 3107.20 | 3104.50 | | |

TABLE I (continued)

LAB BATCH REACTIONS

General Procedure: Incremental Addition of Urea to Aminoethyl piperazine

| REACTION CONDITIONS | EXAMPLE 16 | EXAMPLE 17 | EXAMPLE 18 | EXAMPLE 19 | EXAMPLE 20 |
|---|---|---|---|---|---|
| AEP, g (mole) | 2740.3 (21.208) | 387.63 (3.0) | 516.84 (4.0) | 516.84 (4.0) | 2609 (20.19) |
| UREA, g (mole) | 600.6 (10.0) | 60.06 (1.0) | 60.06 (1.0) | 60.06 (1.0) | 202.12 (3.365) |
| AEP/UREA (mole ratio) | 2.12/1 | 3.0/1 | 4.0/1 | 4.0/1 | 6.0/1 |
| CATALYST | None | DOWEX MSA-1 (Cl form) | 2-methyl imidazole | 2-methyl imidazole | 2-methyl imidazole |
| CATALYST AMOUNT (g per mole UREA) | --- | 49.74 | .64 | .32 | 1.0 |
| REACTION TEMP. (°C) | 120 | 120 | 118 | 120 | 120 |
| UREA Add. Time Hours/ (Seconds) | 1.0 (3600) | 2.3 (8280) | 2.2 (7920) | 3.1 (11,160) | 1.9 (6840) |
| REACTION TIME Hours/ (Seconds) | 118 (424,800) | 22.7 (81,720) | 54.3 (195,480) | 26.5 (95,400) | 107 (385,200) |

TABLE I (continued)

LAB BATCH REACTIONS

General Procedure: Incremental Addition of Urea to Aminoethyl piperazine

| REACTION CONDITIONS | EXAMPLE 16 | EXAMPLE 17 | EXAMPLE 18 | EXAMPLE 19 | EXAMPLE 20 |
|---|---|---|---|---|---|
| EXCESS AEP STRIPPING CONDITIONS: | | | | | |
| Strip temp. (°C) | N.S. | 160 | 125 | 120 | 125 |
| Pressure (mmHg) [Pa] | N.S. | 0.15[20.] | 0.15[20.] | 0.05[6.7] | 0.10[13.] |
| Strip time (hrs) | N.S. | 4.0 | 24.2 | /4 | 3.7 |
| ANALYSIS: | | | | | |
| Amine Equivalent weight | 123.26 | 207.28 | 195.31 | 156.42 | 183.06 |
| Scale of Reactions (g of Reactants) | 3340.9 | 447.69 | 577.54 | 577.22 | 2814.49 |
| Yield (g Product) | 3000.1 | --- | 215.97* | 542.30** | 2671.8** |

*Net wt. of stripped product

**Net wt. after reaction and before stripping

***N.S. = not stripped

Example S—21

To a 4 liter resin kettle equipped with a water cooled condenser, mechanical stirrer, thermometer, temperature controller and heat lamps was added 2480.83 grams (19.2 moles) aminoethylpiperazine (AEP). After heating to 120°C and switch stirring was added 3.55 grams (0.0432 moles) of 2-methyl imidazole. When the temperature once again reached 120°C, 127 grams (2.11 moles) of urea was added over a 1 minute (60 s) period. During this time the temperature cooled down to 112°C. After 10 minutes (600 s), 353.48 grams (5.89 moles) urea was added over a 4 minute (240 s) period. The flask temperature was 122°C and during the addition the flask cooled to 112°C due to ammonia being liberated.

The reaction temperature rose to 120°C in 53 minutes (3180 s) after the last urea addition and this reaction temperature was maintained for 71 hours (255,600 s) addition hours. Then a reaction temperature of 123°C to 125°C was maintained for 23.72 hours (85,392 s). Then the reaction was cooled down. A mass balance for this reaction gave 2695.3 grams. The ammonia weight loss was 269.56 grams (15.86 moles). The expected ammonia weight loss for 100% conversion to pure bis aminoethylpiperazine/urea adduct of $n = 0$ was 272 grams (16 moles) which corresponds to a loss of 2 moles $NH_3$ for each 1 mole of urea. This translates into a yield of 99.10%. A sample was titrated with 1N HCl using bromthymol blue indicator and found to have an amine equivalent weight equal to 111.33. The product was a reddish-brown liquid which had a significantly lower viscosity due to using an excess of greater than 2 moles AEP per 1 mole urea. Initially this run used 19.2 moles AEP to 8 moles urea which equals a 2.4/1 molar ratio. This product was analyzed by liquid chromatography which confirmed the presence of residual AEP and also confirmed that essentially all the urea had reacted since only trace amounts were detectable. This was also confirmed by infrared and gel permeation chromatography. Analysis of this liquid product by NMR (nuclear magnetic resonance) analysis supports the presence of mostly disubstituted urea and some multisubstituted urea components.

Example S—22

A net weight of 339.3 grams of product from the above example was placed in a 1-neck one liter flask. The flask was then attached to a rotary evaporator and the residual aminoethylpiperazine was removed at 65°C to 105°C while using a vacuum pump to reduce the pressure to about 3.5 mm of Hg (460 Pa) absolute pressure at the start of stripping to about 0.05 mm of Hg (6.7 Pa) toward the end of stripping. The total stripping time was 95 minutes (5700 s). A net weight of 266.9 grams of a medium red viscous liquid (at ambient temperature) was obtained. Analysis by nuclear magnetic resonance and infrared strongly supported the reaction product as being a bis AEP/urea adduct of $n = 0$ and $n = 1$. The sample was titrated with 1N HCl using bromthymol blue indicator and found to have an amine equivalent weight of 133.07.

The preparation of starting materials in which A is hydrogen is conducted in a similar manner.

The following example is representative of a preparation giving a crystalline product having predominantly a 1/1 mole ratio of AEP/urea.

Example S—23

To a 1-liter reaction flask equipped with a mechanical stirrer, thermometer, $I^2R$ temperature controller, and water cooled condenser was added 4.86 moles (4.86 equivalents of primary amine) or 628 grams of N-(2-aminoethyl)piperazine (AEP). Then 0.93 gram (0.12 wt% of total) of 2-methylimidazole was added as a catalyst. The reaction solution was then heated to 120°C while stirring well and controlled at this temperature. Then 2.5 moles (5 equivalents) of urea was added manually in 4 increments over a 2.13 hours (7668 s) period. The reaction was allowed to digest at 120°C for an additional 3.5 hours (12,600 s). Two small samples were taken during this time and titrated with 1N HCl using bromthymol blue as the indicator to determine the % conversion. The heat and stirrer was turned off and reaction solution allowed to cool to ambient temperature (~25°C). About 80 volume percent of the reaction flask crystallized. A sample of this crude product (crystals and liquid) was found to contain 48 mole percent 1-(2-piperazinoethyl)urea, 33 mole percent unreacted aminoethylpiperazine, and about 19 mole percent unknown impurities. The crude crystalline product (722 grams) was placed in a large vessel containing 1444 grams of acetone and stirred mechanically for 15 minutes (900 s). The crystalline product was then separated from the liquid phase by filtering through a medium sintered glass funnel using a vacuum flask. A second extraction was made using fresh acetone and filtered as before. The residual acetone was removed using a rotary evaporator at 30° to 40°C and less than 1 mm Hg absolute pressure. A white crystalline solid was obtained having a melting point of 147°C to 152°C. The amine nitrogen equivalent weight calculated by titrating with 1N HCl was 168.14 compared to 172.27 (theory). This product was greater than 90% pure as confirmed by liquid chromatography. Analysis by NMR and infrared were used to identify the product as 1-(2-piperazino-ethyl)urea which can be represented by the following general formula

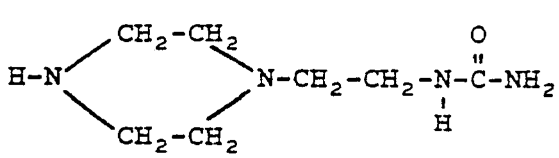

The products of the above reactions are then phosphonomethylated to give the products of the present invention. The method of preparation is shown in Example 1 below. The adduct preferred is one which is completely phosphonomethylated. The most preferred is the completely phosphonomethylated adduct in which m is 0. These have the formula

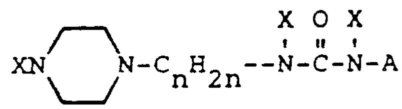

wherein n is 2 or 3 and A is

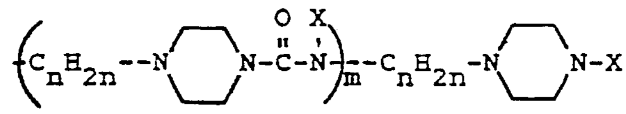 or X

and wherein X is

$$-CH_2-\overset{\overset{O}{\|}}{P}-(OR)_2$$

or H and wherein R is H, ammonium, an alkali or alkaline earth metal and m is 0—2, and wherein at least one X is

$$CH_2\overset{\overset{O}{\|}}{P}-(OR)_2.$$

The following examples show the preparation of these compounds and their use as cement retarders.

Example 1

150 g (0.53 mole) of an aminoethylpiperazine/urea (2/1 mole ratio) reaction product and 90 g of deionized water were added to a 500 ml round-bottom reaction flask equipped with a water-cooled reflux condenser, mechanical stirrer, thermometer with a temperature controller, and an addition funnel. Approximately 200 g of concentrated hydrochloric acid and 92 g (1.1 moles) of phosphorous acid were added with stirring and the mixture heated to reflux and maintained for one hour. Paraformaldehyde (37 g — 91%, 1.1 moles) was added over a one-hour period. The reaction mixture was heated at reflux for an additional two hours and then cooled. The product was evaluated as a cement retarder.

Example 2

The aminoethylpiperazine/urea product employed in Example 1 was phosphonomethylated with approximately 4 mole equivalents of formaldehyde and phosphorous acid according to the general procedure of Example 1. The product was evaluated as a cement retarder.

Example 3

An aminoethylpiperazine/urea reaction product (1/1 mole ratio) was phosphonomethylated using the general procedure of Example 1. The reaction product was evaluated as a cement retarder.

The results of the cement retarder tests are shown in Table II.

TABLE II

Cement Modification Data

| Additive | Time of Observation 6 Hrs. | 24 Hrs. |
|---|---|---|
| Example 1 | retarding - not set, dispersing | retarding - not set, dispersing |
| Example 2 | retarding - not set, dispersing | retarding - not set, dispersing |
| Example 3 | retarding - not set, dispersing | retarding - not set, dispersing |
| *None (blank) | set by 6 hrs. | --- |

*Not an example of the invention.

Example 4

The product of Example 2 above was tested as a cement retarder according to Section 8, API (American Petroleum Institute) Specification 10, using a base slurry, a class H oilfield cement, 50 percent by weight water, 35 percent by weight silica flour, based on weight cement employed. The test was run at 400°F (204.4°C) to determine thickening time. Thickness of 70 Bc (Bearden consistency unit) was determined against time. Different amounts of the retarder (based on weight of cement) were used. With 0.2, 0.5 and 0.7 percent of the retarder thickening time was 60, 180 and 300 minutes, respectively.

**Claims**

1. A process for retarding the setting of an aqueous cement slurry which comprises adding to said slurry an organic phosphonate retarder, characterized in that the organic phosphonate is a compound having the formula

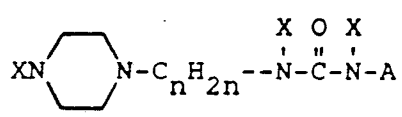

wherein A is

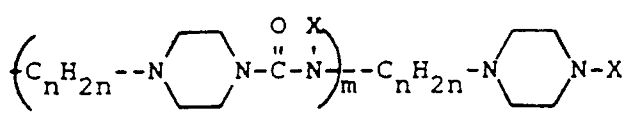 or X;

X is 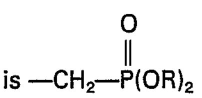 or H;

R is H, ammonium, an alkali or alkaline earth metal; m is 0—2; n is 2 or 3; and wherein at least one X is:—

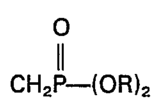

2. A process as claimed in Claim 1, wherein A is

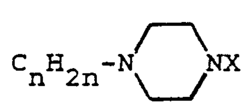

3. A process as claimed in Claim 1 wherein A is X.

4. A process as claimed in any one of Claims 1 to 3, wherein each X is

$$-CH_2\overset{O}{\overset{\|}{P}}(OR)_2.$$

5. A process as claimed in any one of the preceding Claims, wherein R is hydrogen.
6. A process as claimed in any one of the preceding Claims, wherein R is an alkaline earth metal.
7. A process as claimed in any one of the preceding Claims, wherein R is an alkali metal or ammonium.
8. A process as claimed in Claim 6, wherein the alkaline earth metal is magnesium or calcium.
9. A process as claimed in any one of the preceding Claims, wherein n is 2.

**Patentansprüche**

1. Verfahren zur Verzögerung des Erstarrens einer wässrigen Zementaufschlämmung, umfassend Zugabe eines organischen Phophonat-Verzögerers zu der Aufschlämmung, dadurch gekennzeichnet, daß das organische Phosphonat eine Verbindung mit der allgemeinen Formel

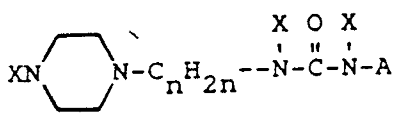

ist, worin A

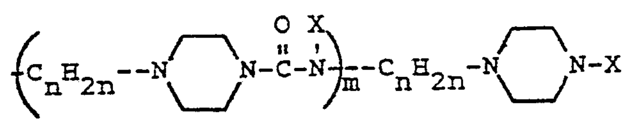 oder X

ist,

$$X\ -CH_2-\overset{O}{\overset{\|}{P}}(OR)_2 \text{ oder H ist,}$$

R H, Ammonium, ein Alkali- oder Erdalkalimetall ist, m 0 bis 2 ist, n 2 oder 3 ist und worin mindestens ein X

$$CH_2\overset{O}{\overset{\|}{P}}-(OR)_2 \text{ ist.}$$

2. Verfahren nach Anspruch 1, worin A

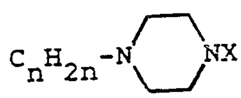

ist.
3. Verfahren nach Anspruch 1, worin A X ist.
4. Verfahren nach einem der Ansprüche 1 bis 3, worin jedes X

$$-CH_2\overset{O}{\overset{\|}{P}}(OR)_2 \text{ ist.}$$

5. Verfahren nach einem der vorhergehenden Ansprüche, worin R Wasserstoff ist.
6. Verfahren nach einem der vorhergehenden Ansprüche, worin R ein Erdalkalimetall ist.
7. Verfahren nach einem der vorhergehenden Ansprüche, worin R ein Alkalimetall oder Ammonium ist.
8. Verfahren nach Anspruch 6, worin das Erdalkalimetall Magnesium oder Kalzium ist.
9. Verfahren nach einem der vorhergehenden Ansprüche, worin n = 2 ist.

**Revendications**

1. Procédé pour retarder la prise d'une suspension de ciment aqueuse, qui comprend l'addition à ladite suspension d'un retardateur de type phosphonate organique, caractérisé en ce que le phosphonate organique est un composé ayant pour formule

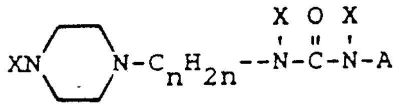

dans laquelle A est

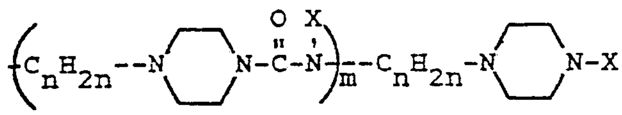 ou X

ou X;

X est 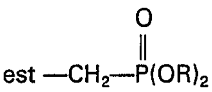 ou H;

R est H, un ammonium, un métal alcalin ou alcalinoterreux; m vaut 0—2; n vaut 2 ou 3; et dans laquelle au moins un X est:

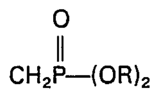

2. Procédé selon la revendication 1, dans lequel A est

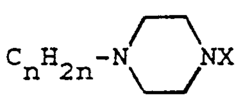

3. Procédé selon la revendication 1, dans lequel A est X.

4. Procédé selon l'une quelconque des revendications 1 à 3, dans lequel chaque X est

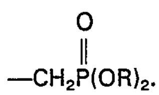

5. Procédé selon l'une quelconque des revendications précédentes, dans lequel R est un hydrogène.

6. Procédé selon l'une quelconque des revendications précédentes, dans lequel R est un métal alcalinoterreux.

7. Procédé selon l'une quelconque des revendications précédentes, dans lequel R est un métal alcalin ou un ammonium.

8. Procédé selon la revendication 6, dans lequel le métal alcalinoterreux est le magnésium ou le calcium.

9. Procédé selon l'une quelconque des revendications précédentes, dans lequel n est égal à 2.